# EUROPEAN PATENT SPECIFICATION

(11) **EP 2 071 686 B1**
(45) Date of publication and mention of the grant of the patent: **07.11.2012**
(21) Application number: 07122798.7
(22) Date of filing: 10.12.2007
(51) Int. Cl.: H02B 11/28

(54) **Medium voltage panel**
Mittelspannungsschaltanlage
Panneau moyenne tension

(43) Date of publication of application: 17.06.2009
(73) Proprietor: ABB Technology AG, 8050 Zürich (CH)
(72) Inventor: Bonfanti, Alessandro, 24022 Alzano Lombardo (BG) (IT)
(74) Representative: Giavarini, Francesco

(56) References cited:
- GB-A- 857 957
- GB-A- 965 013

## Description

The present invention relates to a medium voltage panel, in particular a medium voltage panel having a particular compact construction and structure. For the purposes of the present application the term Medium Voltage is referred to applications in the range of between 1 and 50 kV.

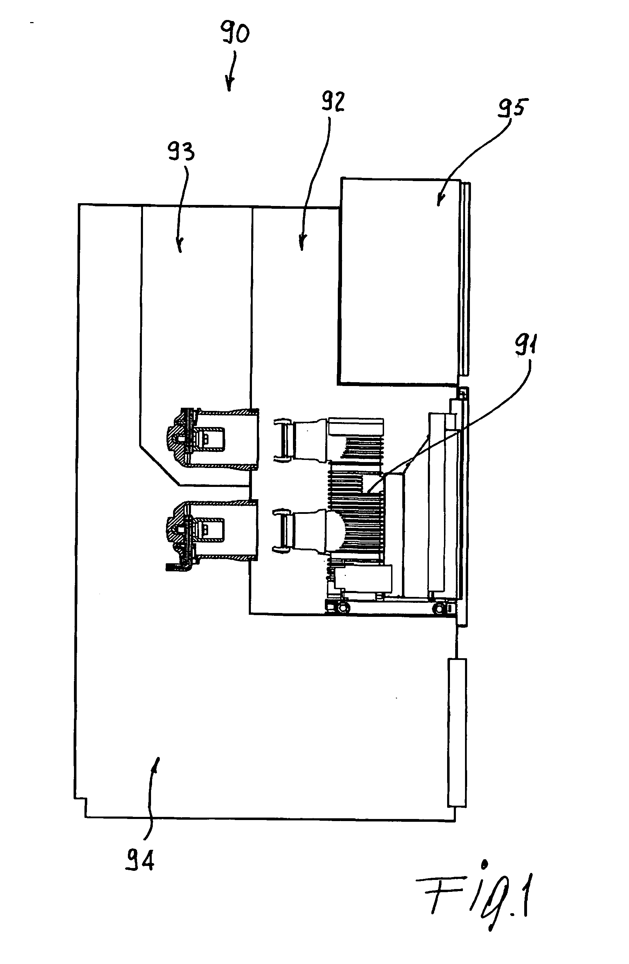

Medium voltage panels are well known in the art and an example of them is schematically represented in Figure 1. They usually consist of a casing 90 that is internally divided into a circuit breaker compartment 92, a bus-bar compartment 93, a cable compartment 94, and a control cabinet 95.

A circuit breaker 91 is normally positioned inside the circuit breaker compartment 92, said circuit breaker being movable between a service position, in which it is connected to the bus-bar and cable systems, and a test/disconnected position (as shown in Figure 1) in which it is isolated from the bus-bar and cable systems. To this end, the circuit breaker 91 is provided, for each phase, with a couple of contacts 96 and 97 that can be engaged/disengaged from corresponding stationary contacts 98 and 99 positioned in the bus-bar and cable compartments 93, 94 and facing the circuit breaker compartment 92.

The bus-bar compartment 93 houses a bus-bar system (not shown in Figure 1) in which each bus-bar is connected to a corresponding stationary contact 98 for connection with the circuit breaker 91, via the corresponding contact 96. Similarly, the cable compartment 94 houses a cable connection system (also not shown) in which each cable is connected to a corresponding stationary contact 99 for connection with circuit breaker 91, via the corresponding contact 97.

Depending on the intended applications, the cable compartment generally also houses a number of different components and apparatuses, such as current transformers, voltage transformers and earthing switches which can be used with a manual or motor-operated mechanism, as well as other additional or alternative components.

The internal volume of the compartments need therefore to be designed so as to allow installation of the various components. At the same time, the need of having standardization, both in terms of production and installations, does not allow to tailor the size of the compartments, and consequently of the panels, according to the needs and the number of components to be housed in the panel. This is somehow in contrast with the need of keeping width and floor occupancy of the panel at a minimum level so as to reduce the overall dimensions of the switchgear inside the installation room.

It should also be noted that the presence of an earthing switch inside the cable compartment, in addition to require some dedicated internal space, also requires dedicated manual or motor-operated actuation systems and a series of mechanical interlocks, with a consequent increase of complexity of the panel as well as manufacturing and installation costs thereof.

Document GB857957 discloses a Medium Voltage panel comprising:
- a casing, a circuit breaker unit (1),
- said circuit breaker unit (1) comprises a first (2) and a second (3) connection contact;
- a third connection contact connected to a corresponding bus-bar (5);
- a fourth connection contact connected to a corresponding cable (4);
- a fifth connection contact connected to ground (8);said circuit breaker unit (11) being movable between: a first position in which said first and second contacts are disconnected from said third fourth and fifth contact; a third position in which one of said first (2) or second (3) contact is connected to said fourth (4) contact, the other of said first or second contact being connected to said third contact.

It is therefore an object of the present invention to provide a medium voltage panel in which the above-mentioned drawbacks are avoided or at least reduced.

More in particular, it is an object of the present invention to provide a medium voltage panel which allows to minimize the occupied space, both in terms of width and occupied area.

As a further object, the present invention is aimed at providing a medium voltage panel having a reduced number of mechanical parts.

Still another object of the present invention is to provide a medium voltage panel with reduced manufacturing and installation costs.

Thus, the present invention relates to a Medium Voltage panel which comprises:
- a casing having internal walls that define at least a first, a second and a third compartment, the first compartment being a circuit breaker compartment housing a circuit breaker unit, the second compartment being a bus-bar compartment housing a bus-bar system, the third compartment being a cable compartment housing a cable system, at least a portion of the walls between the circuit breaker compartment and the bus-bar compartment, and between the circuit breaker compartment and the cable compartment being made of insulating material; wherein, for each phase:

- the circuit breaker unit comprises a first and a second connection contact;
- a third connection contact is positioned in said second compartment and is connected to a corresponding bus-bar;
- a fourth connection contact is positioned in said third compartment and is connected to a corresponding cable;
- a fifth connection contact is positioned in said third compartment and is connected to ground;
   said circuit breaker unit being movable between: a first position in which said first and second contacts are disconnected from said third, fourth and fifth contact; a second position in which one of said first or second contact is connected to said fifth contact, the other of said first or second contact being connected to said fourth contact; and a third position in which one of said first or second contact is connected to said fourth contact, the other of said first or second contact being connected to said third contact.

In this way, it is possible to overcome some of the disadvantages and drawbacks of the panels of the known art. The particular positioning of the connection contacts, the possibility of moving the circuit breaker among three different positions, and the presence of an insulating partition between at least some portions of the compartments, allow to carry out a number of electrical operation (as better defined hereinafter) without having to install an earthing switch and related operating mechanism inside the cable compartment. Consequently, the space demand inside the cable compartment is reduced, thereby allowing a more rational distribution of the total volume of the panel among the various compartments. As a result, the width and floor occupancy of the panel is reduced with respect to similar panel of the prior art.

The number of components and operating parts is reduced, since it is no longer necessary to have an earthing switch and the corresponding motor or manual-operated actuation systems and mechanical interlocks with Circuit Breaker, with a consequent reduction of manufacturing, installation and maintenance costs.

Further characteristics and advantages of the invention will emerge from the description of preferred, but not exclusive embodiments of the panel according to the invention, nonlimiting examples of which are provided in the attached drawings, wherein:
Figure 1 is a lateral view of an example of medium voltage panel of known type;
Figure 2 is a lateral view of a first embodiment of a medium voltage panel according to the invention;
Figure 3 is a lateral view of a second embodiment of a medium voltage panel according to the invention;
Figure 4 is a lateral view of a third embodiment of a medium voltage panel according to the invention;
Figure 5 is a lateral view of a fourth embodiment of a medium voltage panel according to the invention;
Figure 6a-6c are a lateral view of the medium voltage panel of figure 5 represented in three different operating conditions.

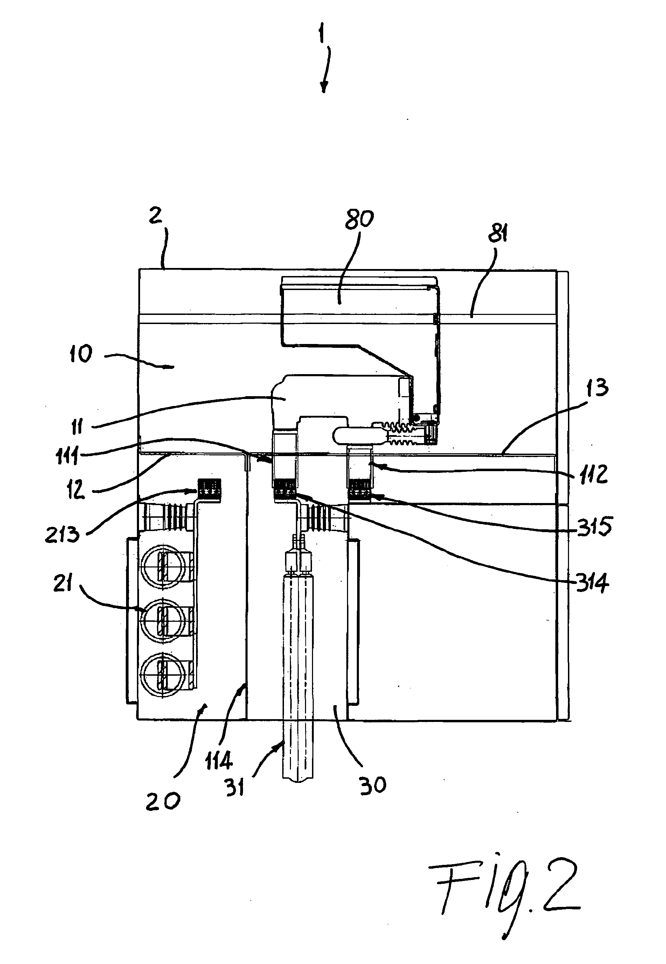

With reference to figures 2-6, the Medium Voltage panel 1 according to the invention in its more general definition comprises a casing 2 having internal walls that divide the internal space of the casing 2 into a number of compartments. In particular, in the casing of the invention the internal walls define at least a first 10, a second 20 and a third 30 compartment.

The first compartment 10 is normally the circuit breaker compartment housing a circuit breaker unit 11, the second compartment 20 is normally a bus-bar compartment housing a bus-bar system 21, while the third compartment 30 is a cable compartment normally housing a cable system 31. Additional components, such as current transformers, voltage transformers, fuses, and similar equipments can also be housed in the compartments.

One of the characteristics of the panel according of the invention consists in that at least a portion of the wall 12 between the circuit breaker compartment 10 and the bus-bar compartment 20 is made of insulating material; similarly at least a portion of the wall 13 between the circuit breaker compartment 10 and the cable compartment 30 is made of insulating material. For what concerns the type of insulating material used in the walls 12 and 13, any kind of insulating material can be used, the polymeric materials being largely preferred.

The medium voltage panel according to the invention also comprises a number of connection contacts appropriately positioned. In particular, the circuit breaker unit 11 comprises, for each phase, a first 111 and a second 112 connection contacts, whose functioning will be described in details hereinafter. Then, for each phase: a third connection contact 213 is positioned in the second compartment 20 and is connected to a corresponding bus-bar; a fourth connection contact 314 is positioned in said third compartment 30 and is connected to a corresponding cable; and a fifth connection contact 315 is positioned in said third compartment 30 and is connected to ground.

Thus, for three-phase applications, the circuit breaker unit 11 will have three couples of connections contacts 111 and 112. At the same time a set of three connection contacts 213 will be positioned inside the compartment 20, each of them being connected to a bus-bar of the corresponding phase. Similarly, a set of three connection contacts 314 will be positioned inside the compartment 30, each of them being connected to a bus-bar of the corresponding phase, and a set of three connection contacts 315 will be positioned inside the compartment 30 for grounding the corresponding phase.

A further characteristics of the medium voltage panel according to the invention is that the circuit breaker unit 11 is movable between three positions. In a first position of the circuit breaker unit 11, the first 111 and second 112 contacts are disconnected from said third 213, fourth 314 and fifth 315 contact; in a second position of the circuit breaker unit 11, one of said first 111 or second 112 contact is connected to said fifth 315 contact, while the other of said first 111 or second 112 contact is connected to said fourth 314 contact; and in a third position of the circuit breaker unit 11, one of said first 111 or second 112 contact is connected to said fourth 314 contact, the other of said first 111 or second 112 contact being connected to said third contact 213. The three positions of the circuit breaker units 11, and the corresponding connection/disconnection of the contacts 111 and 112 with the contacts 213, 314 and 315, brings about to three different operating conditions that will be better described later.

Conveniently, the circuit breaker unit 11 is slidingly mounted inside said first compartment 10 so as to achieve the possibility of moving between the three positions referred to above. To this end, a possible embodiments of the panel 1 according to the invention foresees that the circuit breaker unit 11 is mounted on a frame 80 which is slidingly associated with means that allow movement of the frame 80, and consequently of the circuit breaker unit 11, inside the compartment 10. For instance, the frame 80 can be slidingly associated by means of wheels to a rail system 81 appropriately positioned inside the compartment 10, thereby being able to move among the above-mentioned three different positions.

Preferably, the Medium Voltage panel 1 according to the invention comprises a first wall 12 made of insulating material that separates the circuit breaker compartment 10 from the bus-bar compartment 20, thereby realizing a insulating partition between compartments 10 and 20. It also comprises a second wall 13, also made of insulating material, that separates the circuit breaker compartment 10 from the cable compartment 30, thereby realizing an insulating partition between compartments 10 and 30. A third wall 14, which conveniently is a metallic partition, separates the bus-bar compartment 20 from the cable compartment 30.

With reference to figures 2, 3, 5 and 6, in some embodiments of a Medium Voltage panel 1 according to the invention, the circuit breaker unit 11 is horizontally movable between said first, second and third position. For the purposes of the present invention, the term horizontally refers to the panel when in operating conditions, either floor-positioned or wall-mounted.

With respect to a frontal view of the Medium Voltage panel 1 according to the embodiments represented in figures 2, 5 and 6, the first 12 and second 13 walls are positioned at the same level inside said casing 2 and define an upper compartment 10 housing the circuit breaker unit 11. At the same time, the first 12 and third 14 walls define a lower rear compartment 20 housing the bus-bar system 21, while the second 13 and third 14 walls define a lower front compartment 30 housing the cable system 31. Also in these cases, the terms front view, upper, lower, rear and front refers to the panel when in operating conditions, either floor-positioned or wall-mounted. In other words, the walls 12 and 13 divide the internal volume of the casing 2 into an upper compartment 10 (housing the circuit breaker 11) and a lower compartment, which in turn is divided into a rear compartment 20 and a front compartment 30 by means of the third wall 14.

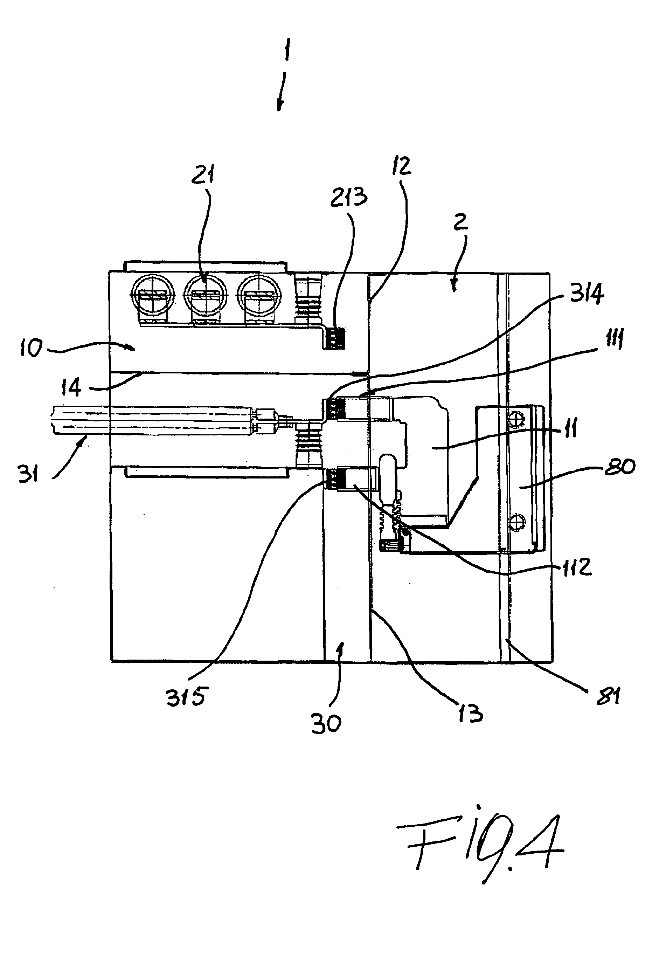

According to an alternative embodiment of a Medium Voltage panel 1 according to the invention, represented in figure 4, the circuit breaker unit 11 is vertically movable between said first, second and third position. With respect to a frontal view of the Medium Voltage panel 1 represented in figure 4 the first 12 and second 13 walls are positioned at the same distance inside said casing 2 and define a front compartment 10 housing the circuit breaker unit 11. At the same time, the first 12 and third 14 walls define an upper rear compartment 20 housing the bus-bar system 21, while the second 13 and third 14 walls define a lower rear compartment 30 housing the cable system 31.

In other words, the walls 12 and 13 divide the internal volume of the casing 2 into an front compartment 10 (housing the circuit breaker 11) and a rear compartment, which in turn is divided into an upper compartment 20 and a lower compartment 30 by means of the third wall 14. Also in this case, the terms front view, upper, lower, rear and front refers to the panel when in operating conditions, either floor-positioned or wall-mounted.

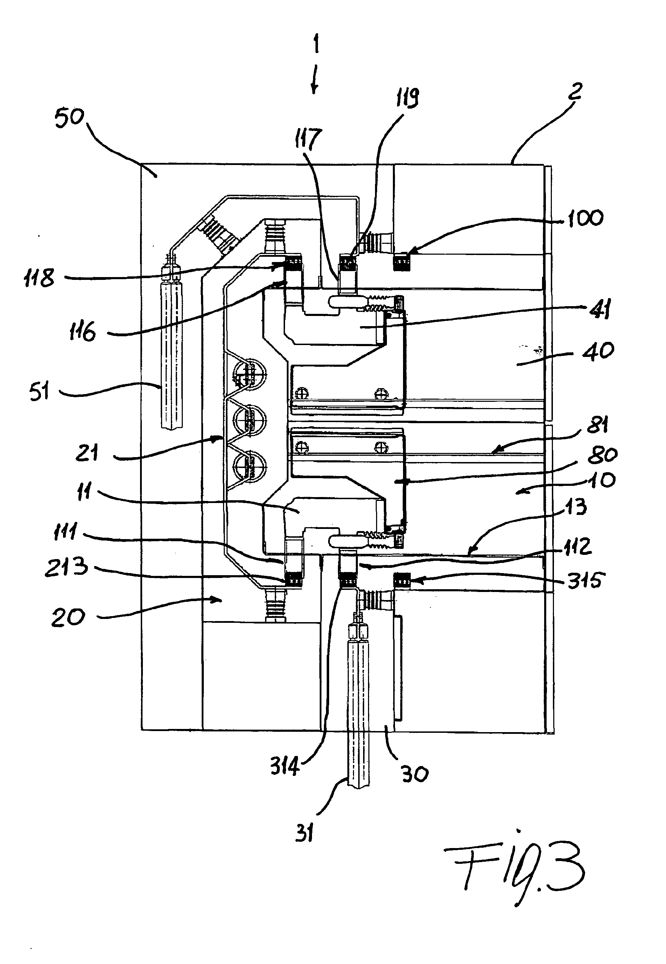

According to a particular embodiment, represented in Figure 3, the Medium Voltage panel 1 can comprise a fourth 40 and a fifth 50 compartments. The fourth compartment 40 is a second circuit breaker compartment housing a second circuit breaker unit 41, while the fifth compartment 50 is a second cable compartment housing a second cable system 51.

The medium voltage panel according to this embodiment comprises a number of additional connection contacts appropriately positioned. In particular, the second circuit breaker unit 41 comprises, for each phase, a sixth 116 and a seventh 117 connection contacts. Then, for each phase: an eighth connection 118 contact is positioned in the bus-bar compartment 20 and is connected to a corresponding bus-bar; a ninth connection contact 119 is positioned in the cable compartment 50 and is connected to a corresponding cable of said second cable system 51; and a tenth connection contact 100 is positioned in the cable compartment 50 and is connected to ground.

Also in this case the second circuit breaker unit 41 is movable between three positions. In a first position of the circuit breaker unit 41, the sixth 116 and seventh 117 contacts are disconnected from the eighth 118, ninth 119 and tenth 100 contact; in a second position of the circuit breaker unit 41, one of said sixth 116 or seventh 117 contacts is connected to said tenth 100 contact, while the other of said sixth 116 or seventh 117 contacts is connected to said ninth 119 contact; and in a third position of the circuit breaker unit 41, one of said sixth 116 or seventh 117 contact is connected to said ninth 119 contact, while the other of said sixth 116 or seventh 117 contact being connected to said eighth contact 118. In this way a typical double-level configuration of the panel can be obtained

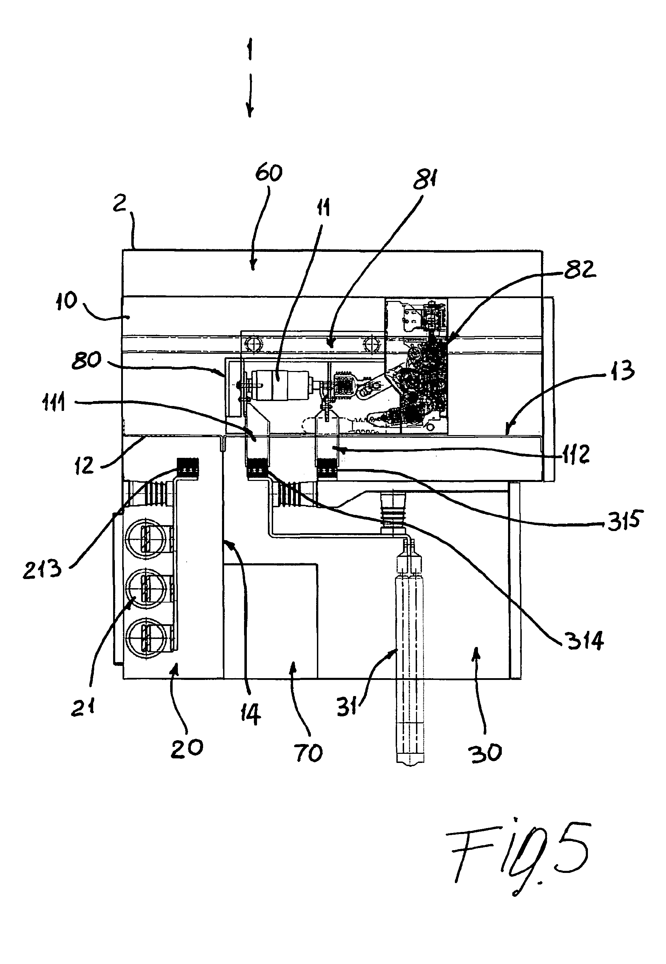

According to a further embodiment of the invention, shown in figure 5, the Medium Voltage panel further comprises a gas exhaust duct 60 for the circuit breaker compartment 10 and a gas exhaust duct 70 for the bus-bar compartment 20 and the cable compartment 30. The gas exhaust duct 60 is in connection with the circuit breaker compartment 10 and allows venting of gases possibly produced in said circuit breaker compartment 10. Similarly, the duct 70 is in connection with the bus-bar compartment 20 and the cable compartment 30 so as to allow venting of gases possibly produced in said compartments. Figure 5 also shows the operating mechanism of the circuit breaker unit 11, i.e. the mechanism that operates the opening and closing of the interruption contacts of the circuit breaker unit 11.

As known, the circuit breaker unit 11 normally comprises, for each phase, at least a first and a second interruption contact for opening and closing the circuit associated thereto. According to a preferred embodiment of the invention, at least one of said interruption contacts is movable along a direction which substantially parallel to the direction of movement of the circuit breaker unit (11,41) between said first, second and third position. In this way it is possible to optimize the space occupied by the interruption unit and therefore reduce the need of volume within the compartment 10. According to a particular preferred embodiment the circuit breaker unit 11 comprises a vacuum circuit breaker.

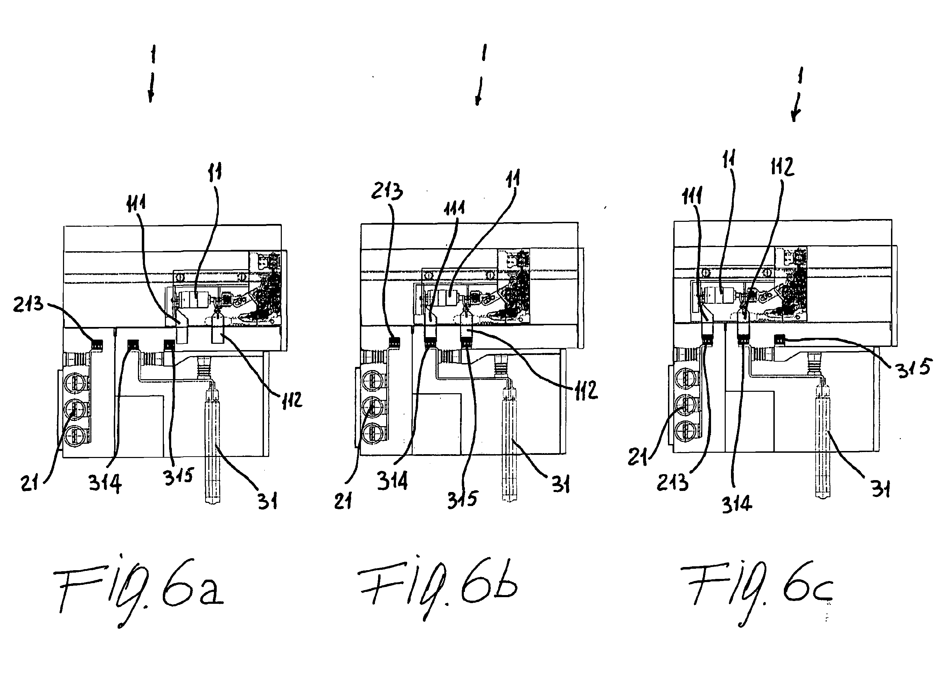

Figures 6a to 6c show an example of a medium voltage panel 1 according to the invention in three different operating conditions. In particular, Figure 6 a shown a situation in which the circuit breaker unit 11 is in the test/disconnected position. As it can be seen, in this position, the circuit breaker unit is isolated since the connection contacts 111 and 112 thereof are not connected with any of the connection contact 213, 314 and 315 positioned in the different compartments of the panel 1.

By moving horizontally the circuit breaker unit 11, it is possible to arrive to the position represented in Figure 2, in which the connection contact 111 and 112 on the circuit breaker unit 11 are respectively connected to the connection contact 314 (in turn connected to a corresponding cable of the cable system 31) and to the connection contact 315 (connected to ground), thereby realizing a grounded condition of the panel (1).

Figure 6c illustrates a third operating conditions of the panel 1, i.e. a service condition, in which the circuit breaker unit 11 is respectively connected to the bus-bar system 21 (via the connection contacts 111 and 213) and to the cable system 31 (via the connection contacts 112 and 314). This position is achieved by further horizontal movement of the circuit breaker unit 11 with respect to the position of figure 6b. Thus, according to the sequence represented in figures 6a-6c it is possible, by sliding the circuit breaker unit 11 inside the compartment 10, to pass from a test/disconnected position to a grounded position and to a service position.

Different sequences, for instance from a grounded position to a test/disconnected position to a service position, can be easily obtained with a different positioning of the contacts 314, 315 and 213 in the respective compartments

The medium voltage panel 1 according to the invention finds its application in medium voltage switchgears which also constitute an aspect of the present invention.

It is clear from the above that the panel of the invention has a number of advantages with respect to similar panel of known type having the same functionality. In particular, it is possible to realize the earthing operation without the need of having dedicated earthing switches and the related operating mechanism. This allows to reduce the number of components, thereby reducing the manufacturing, installation and maintenance costs. Its simplified construction and operating concepts allows further saving of costs, particularly in terms of copper connections normally needed in conventional panels. Moreover the overall structure of the panel can be significantly more compact with respect the panel of known type.

## Claims

1. A Medium Voltage panel (1) comprising:
- a casing (2) having internal walls that define at least a first (10), a second (20) and a third (30) compartment, the first compartment (10) being a circuit breaker compartment housing a circuit breaker unit (11), the second compartment (20) being a bus-bar compartment housing a bus-bar system (21), the third compartment (30) being a cable compartment housing a cable system (31), at least a portion of the walls (12,13) between the circuit breaker compartment (10) and the bus-bar compartment (20), and between the circuit breaker compartment (10) and the cable compartment (30) being made of insulating material; wherein, for each phase:
- said circuit breaker unit (11) comprises a first (111) and a second (112) connection contact;
- a third connection contact (213) is positioned in said second compartment (20) and is connected to a corresponding bus-bar;
- a fourth connection contact (314) is positioned in said third compartment (30) and is connected to a corresponding cable;
- a fifth connection contact (315) is positioned in said third compartment (30) and is connected to ground;
said circuit breaker unit (11) being movable between: a first position in which said first (111) and second (112) contacts are disconnected from said third (213), fourth (314) and fifth (315) contact; a second position in which one of said first (111) or second (112) contact is connected to said fifth (315) contact, the other of said first (111) or second (112) contact being connected to said fourth (314) contact; and a third position in which one of said first (111) or second (112) contact is connected to said fourth (314) contact, the other of said first (111) or second (112) contact being connected to said third contact (213).

2. The Medium Voltage panel (1) of claim 1, **characterized in that** said circuit breaker unit (11) is slidingly mounted inside said first compartment (10).

3. The Medium Voltage panel (1) of claim 1 or 2, **characterized in that** said walls comprise a first (12), a second (13) and a third (14) wall, said first wall (12) being made of insulating material and separating said first compartment (10) from said second compartment (20), said second wall (13) being made of insulating material and separating said first compartment (10) from said third compartment (30), said third wall (14) separating said second compartment (20) from said third compartment (30).

4. The Medium Voltage panel (1) according to one or more of the previous claims, **characterized in that** said circuit breaker unit (11) is horizontally movable between said first, second and third position.

5. The Medium Voltage panel (1) according to claims 3 and 4, **characterized in that**, with respect to a frontal view of the panel: said first (12) and second (13) walls are positioned at the same level inside said casing (2) and define an upper compartment (10) housing said circuit breaker unit (11); said first (12) and third (14) walls define a lower rear compartment (20) housing said bus-bar system (21); said second (13) and third (14) walls define a lower front compartment (30) housing said cable system (31).

6. The Medium Voltage panel (1) according to one or more of claims 1-3, **characterized in that** said circuit breaker unit (11) is vertically movable between said first, second and third position.

7. The Medium Voltage panel (1) according to claims 3 and 6, **characterized in that**, with respect to a frontal view of the panel: said first (12) and second (13) walls are positioned at the same distance inside said casing (2) and define a front compartment (10) housing said circuit breaker unit (11); said first (12) and third (14) walls define an upper rear compartment (20) housing said bus-bar system (21); said second (13) and third (14) walls define a lower rear compartment (30) housing said cable system (31).

8. The Medium Voltage panel (1) according to one or more of the previous claims, **characterized in that** said it comprises a fourth (40) and a fifth (50) compartments, the fourth compartment (40) being a second circuit breaker compartment housing a second circuit breaker unit (41), the fifth compartment(50) being a second cable compartment housing a second cable system (51); wherein, for each phase:
- said second circuit breaker unit (41) comprises a sixth (116) and a seventh (117) connection contact;
- an eighth connection (118) contact is positioned in said second compartment (20) and is connected to a corresponding bus-bar;
- a ninth connection contact (119) is positioned in said fifth compartment (50) and is connected to a corresponding cable of said second cable system (51);
- a tenth connection contact (100) is positioned in said fifth compartment (50) and is connected to ground;
said second circuit breaker unit (41) being movable between: a first position in which said sixth (116) and seventh (117) contacts are disconnected from said eighth (118), ninth (119) and tenth (100) contact; a second position in which one of said sixth (116) or seventh (117) contact is connected to said tenth (100) contact, the other of said sixth (116) or seventh (117) contact being connected to said ninth (119) contact; and a third position in which one of said sixth (116) or seventh (117) contact is connected to said ninth (119) contact, the other of said sixth (116) or seventh (117) contact being connected to said eighth contact (118).

9. The Medium Voltage panel (1) according to one or more of the previous claims, **characterized in that** it comprises a gas exhaust duct (60) for said circuit breaker compartment (10) and a gas exhaust duct (70) for said bus-bar compartment (20) and said cable compartment (30).

10. The Medium Voltage panel (1) according to one or more of the previous claims, **characterized in that** said circuit breaker unit (11,41) comprises, for each phase, a first and a second interruption contacts, at least one of said interruption contacts being movable along a direction substantially parallel to the direction of movement of the circuit breaker unit (11,41) between said first, second and third position.

11. The Medium Voltage panel (1) according to one or more of the previous claims, **characterized in that** said circuit breaker unit (11,41) comprises a vacuum circuit breaker.

12. A Medium Voltage switchgear comprising a panel (1) according to one or more of the previous claims.

## Patentansprüche

1. Mittelspannungstafel (1), aufweisend:
- ein Gehäuse (2) mit Innenwänden, die zumindest einen ersten (10), einen zweiten (20) und einen dritten (30) Raum definieren, wobei der erste Raum (10) ein Leistungsschalterraum ist, in dem eine Leistungsschaltereinheit (11) aufgenommen ist, wobei der zweite Raum (20) ein Sammelschienenraum ist, in dem ein Sammelschienensystem (21) aufgenommen ist, wobei der dritte Raum (30) ein Kabelraum ist, in dem ein Kabelsystem (31) aufgenommen ist, wobei zumindest ein Bereich der Wände (12,13) zwischen dem Leistungsschalterraum (10) und dem Sammelschienenraum (20), und zwischen dem Leistungsschalterraum (10) und dem Kabelraum (30) aus Isoliermaterial besteht; wobei, für jede Phase:
- die Leistungsschaltereinheit (11) einen ersten (111) und einen zweiten (112) Verbindungskontakt aufweist;
- ein dritter Verbindungskontakt (213) in dem zweiten Raum (20) positioniert ist und mit einer entsprechenden Sammelschiene verbunden ist;
- ein vierter Verbindungskontakt (314) in dem dritten Raum (30) positioniert ist und mit einem entsprechenden Kabel verbunden ist;
- ein fünfter Verbindungskontakt (315) in dem dritten Raum (30) positioniert ist und an Masse gelegt ist;
wobei die Leistungsschaltereinheit (11) beweglich ist zwischen: einer ersten Position, in der die ersten (111) und die zweiten (112) Kontakte von dem dritten (213), vierten (314) und fünften (315) Kontakt getrennt sind; einer zweiten Position, in der der erste (111) oder der zweite (112) Kontakt mit dem fünften (315) Kontakt verbunden ist, wobei der jeweils andere erste (111) oder zweite (112) Kontakt mit dem vierten (314) Kontakt verbunden ist; und einer dritten Position, in der entweder der erste (111) oder der zweite (112) Kontakt mit dem vierten Kontakt (314) verbunden ist, wobei der jeweils andere erste (111) oder zweite (112) Kontakt mit dem dritten Kontakt (213) verbunden ist.

2. Mittelspannungstafel (1) nach Anspruch 1, **dadurch gekennzeichnet, dass** die Leistungsschaltereinheit (11) im Inneren des ersten Raums (10) gleitend montiert ist.

3. Mittelspannungstafel (1) nach Anspruch 1 oder 2, **dadurch gekennzeichnet, dass** die Wände eine erste (12), eine zweite (13) und eine dritte (14) Wand aufweisen, wobei die erste Wand (12) aus einem Isoliermaterial besteht und der erste Raum (10) von dem zweiten Raum (20) trennt, wobei die zweite Wand (13) aus Isoliermaterial besteht und den erste Raum (10) von dem dritten Raum (30) trennt, wobei die dritte Wand (14) den zweiten Raum (20) von dem dritten Raum (30) trennt.

4. Mittelspannungstafel (1) nach einem oder mehreren der vorherigen Ansprüche, **dadurch gekennzeichnet, dass** die Leistungsschaltereinheit (11) zwischen der ersten, zweiten und dritten Position horizontal beweglich ist.

5. Mittelspannungstafel (1) nach Anspruch 3 und 4, **dadurch gekennzeichnet, dass**, in Bezug auf eine Vorderansicht der Tafel: die erste (12) und die zweite (13) Wand auf gleicher Höhe im Inneren des Gehäuses (2) positioniert sind und ein oberer Raum (10) definieren, in dem die Leistungsschaltereinheit (11) aufgenommen ist; wobei die erste (12) und die dritte (14) Wand einen unteren hinteren Raum (20) definieren, in dem das Sammelschienensystem (21) aufgenommen ist; wobei die zweite (13) und die dritte (14) Wand einen unteren vorderen Raum (30) definieren, in dem das Kabelsystem (31) aufgenommen ist.

6. Mittelspannungstafel (1) nach einem oder mehreren der Ansprüche 1 bis 3, **dadurch gekennzeichnet, dass** die Leistungsschaltereinheit (11) zwischen der ersten, zweiten und dritten Position vertikal beweglich ist.

7. Mittelspannungstafel (1) nach Anspruch 3 und 6, **dadurch gekennzeichnet, dass**, in Bezug auf eine Vorderansicht der Tafel: die erste (12) und die zweite (13) Wand im gleichen Abstand im Inneren des Gehäuses (2) positioniert sind und einen vorderen Raum (10) definieren, in dem die Leistungsschaltereinheit (11) aufgenommen ist; wobei die erste (12) und die dritte (14) Wand einen oberen hinteren Raum (20) definieren, in dem das Sammelschienensystem (21) aufgenommen ist; wobei die zweite (13) und die dritte (14) Wand einen unteren hinteren Raum (30) definieren, in dem das Kabelsystem (31) aufgenommen ist.

8. Mittelspannungstafel (1) nach einem oder mehreren der vorherigen Ansprüche, **dadurch gekennzeichnet, dass** sie einen vierten (40) und einen fünften (50) Raum aufweist, wobei der vierte Raum (40) ein zweiter Leistungsschalterraum ist, in dem eine zweite Leistungsschaltereinheit (41) aufgenommen ist, wobei der fünfte Raum (50) ein zweiter Kabelraum ist, in dem ein zweite Kabelsystem (51) aufgenommen ist, wobei, für jede Phase:
- die zweite Leistungsschaltereinheit (41) einen sechsten (116) und einen siebten (117) Verbindungskontakt aufweist;
- ein achter (118) Verbindungskontakt in dem zweiten Raum (20) positioniert ist und mit einer entsprechenden Sammelschiene verbunden ist;
- ein neunter Verbindungskontakt (119) in dem fünften Raum (50) positioniert ist und mit einem entsprechenden Kabel des zweiten Kabelsystems (51) verbunden ist;
- ein zehnter Verbindungskontakt (100) in dem fünften Raum (50) positioniert ist und an Masse gelegt ist;
wobei die zweite Leistungsschaltereinheit (41) beweglich ist zwischen: einer ersten Position, in der die sechsten (116) und die siebten (117) Kontakte von dem achten (118), neunten (119) und zehnten (100) Kontakt getrennt sind; einer zweiten Position, in der der sechste (116) oder siebte (117) Kontakt von dem zehnten (100) Kontakt getrennt ist; wobei der jeweils andere sechste (116) oder siebte (117) Kontakt mit dem neunten (119) Kontakt verbunden ist; und einer dritten Position, in der der sechste (116) oder siebte (117) Kontakt mit dem neunten (119) Kontakt verbunden ist, wobei der jeweils andere sechste (116) oder siebte (117) Kontakt mit dem achten Kontakt (118) verbunden ist.

9. Mittelspannungstafel nach einem oder mehreren der vorherigen Ansprüche, **dadurch gekennzeichnet, dass** sie einen Gasauslasskanal (60) für den Leistungsschalterraum (10) und einen Gasauslasskanal (70) für den Sammelschienenraum (20) und den Kabelraum (30) aufweist:

10. Mittelspannungstafel (1) nach einem oder mehreren der vorherigen Ansprüche, **dadurch gekennzeichnet, dass** die Leistungsschaltereinheit (11,41), für jede Phase, eine ersten und einen zweiten Unterbrechungskontakt aufweist, wobei zumindest einer der Unterbrechungskontakte entlang einer Richtung beweglich ist, die im Wesentlichen parallel zu der Bewegungsrichtung der Leistungsschaltereinheit (11, 41) zwischen der ersten, zweiten und dritten Position ist.

11. Mittelspannungstafel (1) nach einem oder mehreren der vorherigen Ansprüche, **dadurch gekennzeichnet, dass** die Leistungsschaltereinheit (11, 41) einen Vakuumleistungsschalter aufweist.

12. Mittelspannungsschaltanlage, die eine Tafel (1) nach einem oder mehreren der vorherigen Ansprüche aufweist.

## Revendications

1. Panneau moyenne tension (1) qui comprend :
- une enceinte (2) munie de parois internes qui définissent au moins un premier (10), un second (20) et un troisième (30) compartiments, le premier compartiment (10) étant un compartiment de disjoncteur qui contient une unité formant disjoncteur (11), le second compartiment (20) étant un compartiment de système formant barre omnibus qui contient un système formant barre omnibus (21), le troisième compartiment (30) étant un compartiment de câbles qui contient un système de câbles (31), au moins une partie des parois (12, 13) entre le compartiment de disjoncteur (10) et le compartiment de barre omnibus (20), et entre le compartiment de disjoncteur (10) et le compartiment de câbles (30) étant composée d'un matériau isolant ; dans lequel, pour chaque phase :
- ladite unité formant disjoncteur (11) comprend un premier (111) et un second (112) contacts de connexion ;
- un troisième contact de connexion (213) est positionné dans ledit second compartiment (20) et est relié à une barre omnibus correspondante ;
- un quatrième contact de connexion (314) est positionné dans ledit troisième compartiment (30) et est relié à un câble correspondant ;
- un cinquième contact de connexion (315) est positionné dans ledit troisième compartiment (30) et est relié à la terre ;
ladite unité formant disjoncteur (11) pouvant passer entre : une première position dans laquelle lesdits premier (111) et second (112) contacts sont déconnectés desdits troisième (213), quatrième (314) et cinquième (315) contacts ; une seconde position dans laquelle l'un dudit premier (111) ou second (112) contact est relié audit cinquième (315) contact, l'autre dudit premier (111) ou dudit second (112) contact étant relié audit quatrième (314) contact ; et une troisième position dans laquelle l'un dudit premier (111) ou second (112) contact est relié audit quatrième (314) contact, l'autre dudit premier (111) ou second (112) contact étant relié audit troisième contact (213).

2. Panneau moyenne tension (1) selon la revendication 1, **caractérisé en ce que** ladite unité formant disjoncteur (11) est montée de manière coulissante à l'intérieur dudit premier compartiment (10).

3. Panneau moyenne tension (1) selon la revendication 1 ou 2, **caractérisé en ce que** lesdites parois comprennent une première (12), une seconde (13) et une troisième (14) parois, ladite première paroi (12) étant composée d'un matériau isolant et séparant ledit premier compartiment (10) dudit second compartiment (20), ladite seconde paroi (13) étant composée d'un matériau isolant et séparant ledit premier compartiment (10) dudit troisième compartiment (30), ladite troisième paroi (14) séparant ledit second compartiment (20) dudit troisième compartiment (30).

4. Panneau moyenne tension (1) selon une ou plusieurs des revendications précédentes, **caractérisé en ce que** ladite unité formant disjoncteur (11) peut passer horizontalement entre lesdites première, seconde et troisième positions.

5. Panneau moyenne tension (1) selon les revendications 3 et 4, **caractérisé en ce que**, par rapport à une vue de devant dudit panneau : lesdites première (12) et seconde (13) parois sont positionnées au même niveau à l'intérieur de ladite enceinte (2) et définissent un compartiment supérieur (10) qui contient ladite unité formant disjoncteur (11) ; lesdites première (12) et troisième (14) parois définissent un compartiment arrière inférieur (20) qui contient ledit système formant barre omnibus (21) ; lesdites seconde (13) et troisième (14) parois définissent un compartiment avant inférieur (30) qui contient ledit système de câbles (31).

6. Panneau moyenne tension (1) selon l'une des revendications 1 à 3, **caractérisé en ce que** ladite unité formant disjoncteur (11) peut passer verticalement entre lesdites première, seconde et troisième positions.

7. Panneau moyenne tension (1) selon les revendications 3 et 6, **caractérisé en ce que**, par rapport à une vue de devant du panneau : lesdites première (12) et seconde (13) parois sont positionnées à la même distance à l'intérieur de ladite enceinte (2) et définissent un compartiment avant (10) qui contient ladite unité formant disjoncteur (11) ; lesdites première (12) et troisième (14) parois définissent un compartiment arrière supérieur (20) qui contient ledit système formant barre omnibus (21) ; lesdites secondes (13) et troisième (14) parois définissent un compartiment arrière inférieur (30) qui contient ledit système de câbles (31).

8. Panneau moyenne tension (1) selon l'une des revendications précédentes, **caractérisé en ce qu'**il comprend un quatrième (40) et un cinquième (50) compartiments, le quatrième compartiment (40) étant un second compartiment de disjoncteur qui contient une seconde unité formant disjoncteur (41), le cinquième compartiment (50) étant un second compartiment de câbles qui contient un second système de câbles (51) ; dans lequel, pour chaque phase :
- ladite seconde unité formant disjoncteur (41) comprend un sixième (116) et un septième (117) contacts de connexion ;
- un huitième contact de connexion (118) est positionné dans ledit second compartiment (20) et est relié à une barre omnibus correspondante ;
- un neuvième contact de connexion (119) est positionné dans ledit cinquième compartiment (50) et est relié à un câble correspondant dudit second système de câbles (51) ;
- un dixième contact de connexion (100) est positionné dans ledit cinquième compartiment (50) et est relié à la terre ;
ladite seconde unité formant disjoncteur (41) pouvant passer entre : une première position dans laquelle lesdits sixième (116) et septième (117) contacts sont déconnectés desdits huitième (118), neuvième (119) et dixième (100)contacts ; une seconde position dans laquelle l'un dudit sixième (116) ou septième (117) contact est relié audit dixième (100) contact, l'autre dudit sixième (116) ou septième (117) contact étant relié audit neuvième (119) contact; et une troisième position dans laquelle l'un dudit sixième (116) ou septième (117) contact est relié audit neuvième (119) contact, l'autre dudit sixième (116) ou septième (117) contact étant relié audit huitième (118) contact.

9. Panneau moyenne tension (1) selon une ou plusieurs des revendications précédentes, **caractérisé en ce qu'**il comprend une conduite d'évacuation de gaz (60) destinée audit compartiment de disjoncteur (10) et une conduite d'évacuation de gaz (70) destinée audit compartiment de barre omnibus (20) et audit compartiment de câbles (30).

10. Panneau moyenne tension (1) selon une ou plusieurs des revendications précédentes, **caractérisé en ce que** ladite unité formant disjoncteur (11, 41) comprend, pour chaque phase, un premier et un second contacts de coupure, au moins l'un desdits contacts de coupure étant mobile dans une direction sensiblement parallèle à la direction de mouvement de l'unité formant disjoncteur (11, 41) entre lesdites première, seconde et troisième positions.

11. Panneau moyenne tension (1) selon une ou plusieurs des revendications précédentes, **caractérisé en ce que** ladite unité formant disjoncteur (11, 41) comprend une unité formant disjoncteur sous vide.

12. Disjoncteur moyenne tension qui comprend un panneau (1) selon une ou plusieurs des revendications précédentes.
